# EUROPEAN PATENT APPLICATION

(11) **EP 1 901 573 A1**
(43) Date of publication of application: **19.03.2008**
(21) Application number: 06782198.3
(22) Date of filing: 02.08.2006
(51) Int. Cl.: H04Q 7/38, H04B 7/26, H04J 11/00

(54) **BASE STATION APPARATUS, COMMUNICATION TERMINAL APPARATUS, AND MULTICARRIER COMMUNICATION METHOD**

(30) Priority: 03.08.2005 JP 2005225892
(71) Applicant: MATSUSHITA ELECTRIC INDUSTRIAL CO., LTD., Osaka 571-8501 (JP)
(72) Inventor: KURI, Kenichi Matsushita Electric Industrial Co.,Ltd, 2-1-61, Shiromi, Chuo-ku Osaka 540-6207 (JP); IMAMURA, Daichi Matsushita Electric Industrial Co.,Ltd, 2-1-61, Shiromi, Chuo-ku Osaka 540-6207 (JP); NISHIO, Akihiko Matsushita Electric Industrial Co.,Ltd, 2-1-61, Shiromi, Chuo-ku Osaka 540-6207 (JP)
(74) Representative: Zimmer, Franz-Josef
(86) International application number: PCT/JP2006/315329
(87) International publication number: WO 2007/015529

(57) **Abstract**

A multicarrier communication method capable of improving the frequency utilization efficiency and the throughput of the communication system, while satisfying the QoS. A communication terminal reports the CQI about all of the subchannels included in the bandwidth of a communication channel during a first CQI report, as shown in the upper figure portion. Unlike the first report, during the second and following CQI reports, in which much time is left in terms of the permissible delay time, the communication terminal reports the CQI only about subchannels 1 and 2 assigned by the second and following frequency assignments, as shown in the lower figure portion.

## Description

### Technical Field

The present invention relates to a base station apparatus, communication terminal apparatus and multicarrier communication method.

### Background Art

In a radio communication system, to produce high throughput, there is a technique for reporting channel quality information referred to as "CQI" (Channel Quality Indicator) from a communication terminal to abase station and determining at the base station modulation parameters (MCS: Modulation Coding Scheme) upon transmission based on the reported CQI.

However, when this technique is applied to a multicarrier communication system with the high transmission rate such as OFDM (Orthogonal Frequency Division Multiplexing), the number of channels and the number of terminals accommodated increase, and so there is a problem that the amount of CQI information reported to the base station becomes enormous, the amount of uplink overhead increases and transmission efficiency decreases.

To solve this problem, Patent Document 1, for example, discloses a technique for: determining at a base station the number of subcarriers to be assigned to each communication terminal based on reported CQI's; reporting the number of subcarriers from the base station to each communication terminal; and reducing at each communication terminal the amount of reported CQI information by selecting subcarriers matching the number of assigning subcarriers in order of good received quality and reporting CQI's with respect to these subcarriers to the base station.
Patent Document 1: International Publication No.2005/020489 (page 12, line 19 to 24)

### Disclosure of Invention

### Problems to be Solved by the Invention

However, according to the technique disclosed in Patent Document 1, the base station needs to report original communication data and the number of assigning subchannels separately to each communication terminal, and so there is a problem of poor frequency efficiency.

When content of actual communication data is taken into account, following problems occur. That is, data to be communicated and transmission rates are different between communication terminals. For example, some communication terminal carries out stream reception of moving images such as Internet television while other communication terminal only browses texts on a web site. Further, real-time processing of communication differs between communication terminals. For example, some communication terminal carries out real time communication by speech while other communication terminal exchanges electronic mails. In this way, required quality (QoS: Quality of Service), to be more specific, the minimum transmission rate, error rate and allowable delay time, differs between communication terminals. However, when the technique disclosed in Patent Document 1 is applied under the condition where QoS differs between communication terminals, the number of subcarriers is evenly limited with respect to all communication terminals. Consequently, there is a problem that, on one hand, a communication terminal with moderate QoS (where the time left in the allowable delay time is long) can satisfy QoS with ease, and, on the other hand, a communication terminal with high QoS (where the time left in the allowable delay time is short) cannot satisfy QoS. As a result, a communication system throughput decreases.

It is therefore an object of the present invention to provide a base station apparatus, communication terminal apparatus and multicarrier communication method that can satisfy QoS and improve frequency efficiency and a communication system throughput.

### Means for Solving the Problem

The base station apparatus according to the present invention adopts a configuration including: an assigning section that assigns a subchannel to a communication terminal based on a channel quality indicator reported from the communication terminal; a deciding section that decides a time left in an allowable delay time for data transmitted by the communication terminal; and a commanding section that commands the communication terminal with the time left equal to or longer than a predetermined time, to report the channel quality indicator with respect to the assigned subchannel.

### Advantageous Effect of the Invention

The present invention can satisfy QoS and improve frequency efficiency and a communication system throughput.

### Brief Description of Drawings

FIG. 1 is a block diagram showing a main configuration of a base station apparatus according to Embodiment 1;
FIG. 2 is a block diagram showing a main configuration inside an assignment control information generating section according to Embodiment 1;
FIG.3 shows detailed relationships between packet timeout value Pt and a frame timing;
FIG.4 shows relationships between an allowable delay time of each data and a value of Pt;
FIG.5 is a flowchart showing schematic processing steps of the assignment control information generating section according to Embodiment 1;
FIG. 6 shows how the CQI reported by a communication terminal changes according to Embodiment 1;
FIG.7 is a block diagram showing a main configuration of a communication terminal apparatus according to Embodiment 1;
FIG. 8 is a block diagram showing a main configuration inside a CQI generating section according to Embodiment 1;
FIG. 9 is a flowchart showing processing steps of the CQI generating section according to Embodiment 1;
FIG.10 is a sequence diagram showing a series of processings of the base station and communication terminal according to Embodiment 1;
FIG.11 shows an example of a frame format of assignment control information according to Embodiment 1;
FIG.12 is a flowchart showing a series of processing steps of the base station apparatus according to Embodiment 1;
FIG.13 shows an example of a frequency assignment managing table according to Embodiment 1;
FIG.14A illustrates how CQI report methods switch according to Embodiment 1;
FIG.14B illustrates how CQI report methods switch according to Embodiment 1;
FIG.14C illustrates how CQI report methods switch according to Embodiment 1;
FIG.15A shows a result of examining the effect according to Embodiment 1 using simulation;
FIG.15B shows a result of examining the effect according to Embodiment 1 using simulation;
FIG.16 is a block diagram showing a main configuration inside the assignment control information generating section according to Embodiment 2;
FIG.17 is a flowchart showing schematic processing steps of the assignment control information generating section according to Embodiment 2;
FIG.18A shows how the CQI reported by the communication terminal changes according to Embodiment 2;
FIG.18B shows how the CQI reported by the communication terminal changes according to Embodiment 2;
FIG.18C shows how the CQI reported by the communication terminal changes according to Embodiment 2;
FIG.19 shows relationships between format designating information, the time left in the allowable delay time, transmission rate and reception variation deciding information according to Embodiment 2;
FIG.20 shows a frame format for reporting transmission rate information according to Embodiment 2;
FIG.21 is a block diagram showing a main configuration inside the CQI generating section according to Embodiment 2;
FIG.22 is a flowchart showing processing steps of the CQI generating section according to Embodiment 2;
FIG.23A illustrates how CQI report methods switch according to Embodiment 2;
FIG.23B illustrates how CQI report methods switch according to Embodiment 2;
FIG.24A shows a result of examining the effect according to Embodiment 2 using simulation;
FIG.24B shows a result of examining the effect according to Embodiment 2 using simulation;
FIG.25 shows relationships between format designating information, the time left in the allowable delay time, transmission rate and reception variation deciding information according to Embodiment 3;
FIG.26A shows how the CQI reported by the communication terminal changes according to Embodiment 3;
FIG.26B shows how the CQI reported by the communication terminal changes according to Embodiment 3;
FIG.27 is a flowchart showing processing steps of the CQI generating section according to Embodiment 3;
FIG.28A shows how CQI report methods switch according to Embodiment 3; and
FIG.28B shows how CQI report methods switch according to Embodiment 3.

### Best Mode for Carrying Out the Invention

Hereinafter, embodiments of the present invention will be described in detail with reference to the accompanying drawings.

### (Embodiment 1)

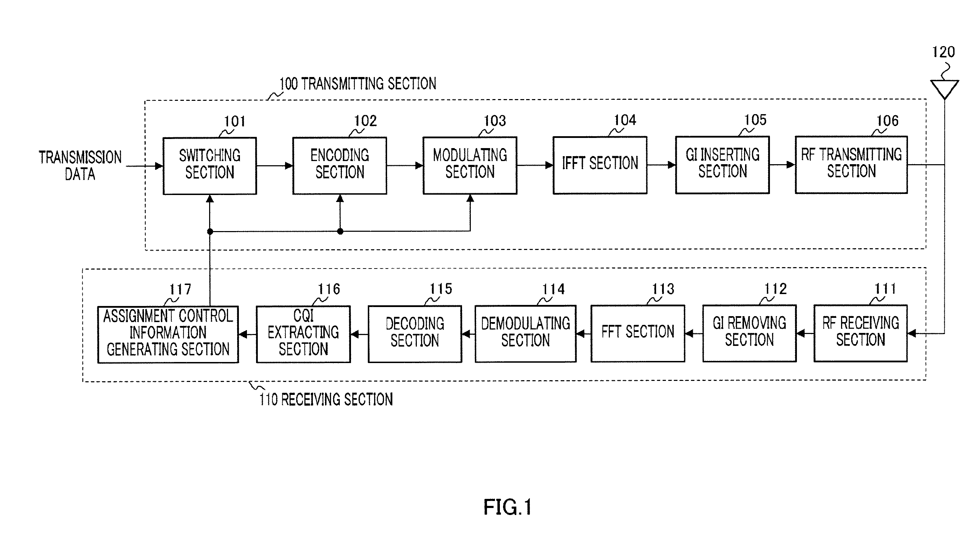

FIG. 1 is a block diagram showing a main configuration of a base station apparatus according to Embodiment 1 of the present invention. An example will be described here where the communication system transmits MCS parameters by selecting the parameters on a per subchannel basis in a closed-loop communication system. Further, a "subchannel" generally refers to a band formed with a single or a plurality of subcarriers and is a control unit for frequency scheduling (i.e. frequency assignment) and adaptive modulation.

The base station apparatus according to this embodiment is formed mainly with transmitting section 100 and receiving section 110. Transmitting section 100 has switching section 101, encoding section 102, modulating section 103, IFFT section 104, GI inserting section 105 and RF transmitting section 106. Receiving section 110 has RF receiving section 111, GI removing section 112, FFT section 113, demodulating section 114, decoding section 115, CQI extracting section 116 and assignment control information generating section 117.

Each section of the base station apparatus according to this embodiment carries out following operation. First, transmitting section 100 will be described.

Switching section 101 switches transmission data and assignment control information outputted from assignment control information generating section 117 and outputs either information to encoding section 102. Encoding section 102 carries out error correction encoding of transmission data or assignment control information outputted from switching section 101, at a coding rate included in the assignment control information outputted from assignment control information generating section 117, and outputs the acquired encoded signal to modulating section 103. Modulating section 103 carries out M-ary modulation such as QPSK and 16 QAM of the encoded signal outputted from encoding section 102, based on an M-ary modulation number included in the assignment control information outputted from assignment control information generating section 117, on a per subchannel basis. IFFT section 104 carries out an inverse fast Fourier transform (IFFT) of the signal modulated on a per subchannel basis, and multiplexes the signal with a plurality of orthogonal carriers. To reduce inter-symbol interference (ISI) due to delay waves, GI inserting section 105 inserts a guard interval (GI) to the multiplex signal outputted from IFFT section 104. RF transmitting section 106 converts the frequency of the baseband signal outputted from GI inserting section 105 to a radio frequency (RF) and transmits the signal to a communication terminal from antenna 120.

Next, receiving section 110 will be described.

RF receiving section 111 receives a signal from each communication terminal through antenna 120 and carries out frequency conversion of the radio frequency signal to a baseband signal. GI removing section 112 removes the guard interval from a received baseband signal. FFT section 113 carries out a fast Fourier transform (FFT) of the received signal from which the guard interval is removed, and converts the signal to frequency domain data. Demodulating section 114 demodulates the received signal outputted from FFT section 113 and acquires a demodulated signal. Decoding section 115 carries out error correction decoding of the demodulated signal outputted from demodulating section 114. CQI extracting section 116 extracts the CQI transmitted from each communication terminal out of received information included in the decoded signal outputted from decoding section 115, and outputs the CQI to assignment control information generating section 117.

Assignment control information generating section 117 assigns the frequency to each communication terminal by utilizing the CQI of each communication terminal outputted from CQI extracting section 116 and the time left in the allowable delay time of received data, and determines MCS parameters and format designating information. Assignment control information generating section 117 generates assignment control information by combining identification information (ID), MCS parameters and format designating information of the determined assigned subchannels, and outputs these items of information to switching section 101, encoding section 102 and modulating section 103. Further, "MCS parameters" refer to parameters such as coding rate for error correction encoding, M-ary modulation numbers and repetition factors. "Format designating information" specifies the frame format for the next CQI report from a communication terminal.

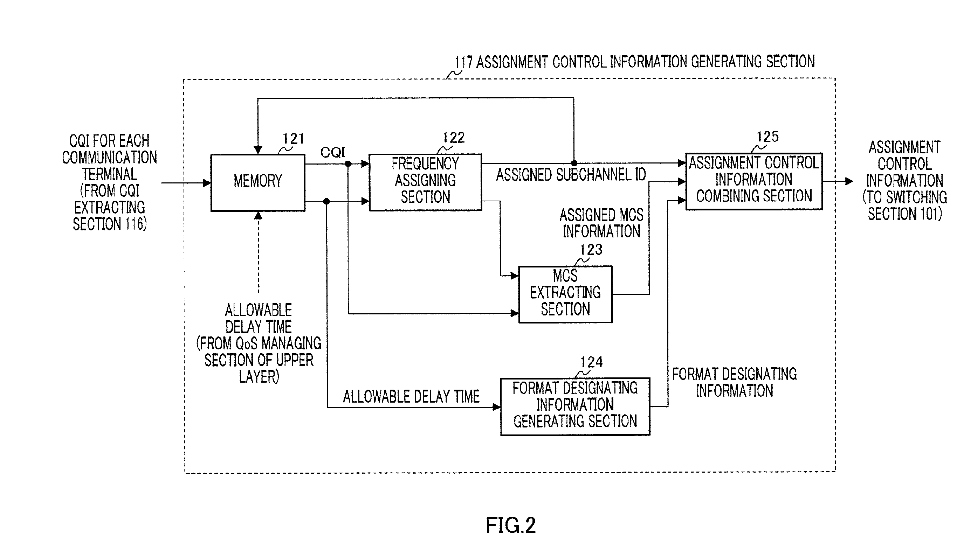

FIG.2 is a block diagram showing a main configuration inside assignment control information generating section 117.

Memory 121 receives an input of the CQI for each communication terminal from CQI extracting section 116 and the allowable delay time set for data for each communication terminal from a QoS managing section (not shown) of an upper layer. This "allowable delay time" refers to the duration of the time set according to the real-time processing required for the data. Further, the "allowable delay time" refers to the duration of the time allowed to wait for data reception, that is, the maximum delay time allowed for processing of storing data in a transmission queue of a base station, transmitting the data and receiving accurately the data at a communication terminal. Memory 121 holds these items of data for a predetermined time, outputs the CQI's to frequency assigning section 122 and MCS extracting section 123 in response to the request, and outputs an allowable delay time to frequency assigning section 122 and format designating information generating section 124.

Frequency assigning section 122 assigns the frequency to each communication terminal using the CQI and allowable delay time and outputs subchanel ID of the assigned subchannel to MCS extracting section 123, assignment control information combining section 125 and memory 121.

After receiving the assigned subchannel ID for each communication terminal outputted from frequency assigning section 122, MCS extracting section 123 extracts MCS parameters matching the assigned subchannel ID based on the CQI for each communication terminal outputted from memory 121. The extracted MCS parameters are outputted to assignment control information combining section 125.

Format designating information generating section 124 calculates the time left in the allowable delay time for each data based on the allowable delay time for data for each communication terminal outputted from memory 121. To be more specific, the above time left is calculated by calculating the time that has passed after each data was stored in the transmission queue with reference to an internal timer and subtracting the time passed from the allowable delay time. Further, format designating information generating section 124 carries out threshold decision of the calculated time left and outputs CQI frame format designating information showing the decision result, to assignment control information combining section 125.

The above "format designating information" refers to information designating the frame format used upon the next CQI report from a communication terminal and is represented by, for example, "0" and "1." Further, format designating information "0" is used for data with a little time left and specifies a "CQI report method for reporting CQI's with respect to all subchannels," to the communication terminal. Further, format designating information "1" is used for data with a long time left upon a second time or subsequent CQI report, and specifies the "CQI report method for reporting CQI's with respect to only subchannels assigned by frequency assignment," to the communication terminal.

Assignment control in formation combining section 125 combines the assigned subchannel ID of each communication terminal, MCS parameter information of subchannels matching the ID and format designating information designating a frame format of the CQI upon the next CQI report to generate assignment control information. The generated assignment control information is transmitted by transmitting section 100 to each communication terminal.

By providing the above configuration, assignment control information generating section 117 can change the next CQI report method for the communication terminal, depending on whether the time left in the calculated allowable delay time is long or short. That is, by reporting CQI frame format designating information to a communication terminal, assignment control information generating section 117 can specify the CQI frame format used upon the next CQI report and practically control the next CQI report method for the communication terminal.

To be more specific, assignment control information generating section 117 uses following packet timeout value Pt as the time left in the allowable delay time for each data. This packet timeout value Pt is a parameter representing the above time left using transmission frame timing intervals (i.e. the number of frames). Further, if transmission is carried out in a range satisfying QoS, Pt takes positive numbers of zero or more. If a target packet is not accurately received at the communication terminal and is held in a transmission queue of the base station, Pt is decremented by one each time a frame progress passes. If the packet timeout value takes negative values, the base station discards the packet.

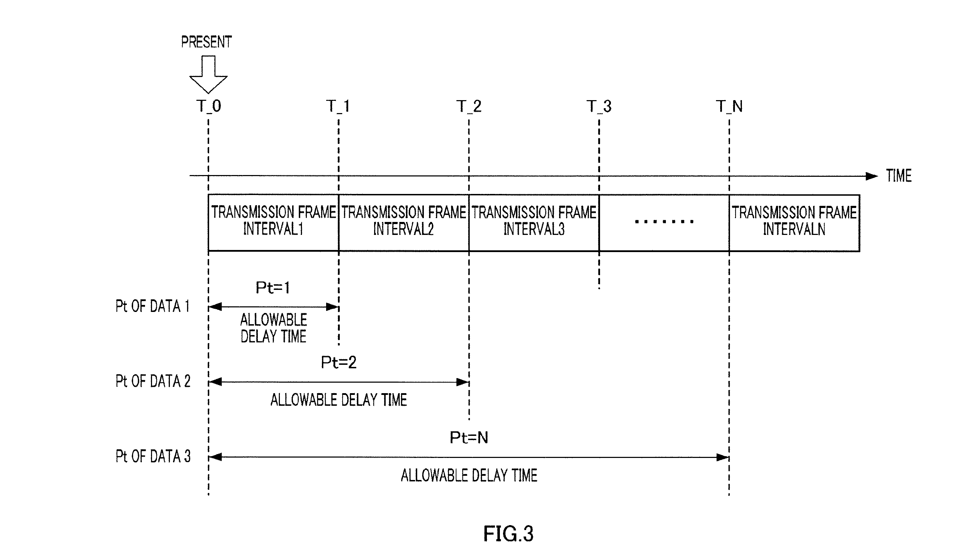

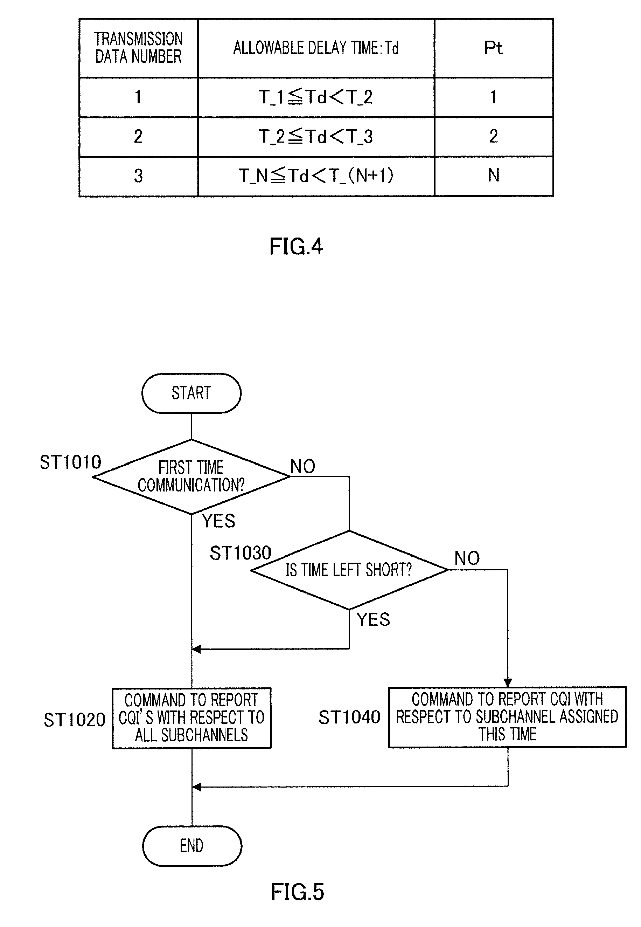

FIG.3 shows detailed relationships between packet timeout value Pt and a frame timing. Further, FIG.4 shows relationships between the allowable delay time for each data and the value of Pt.

The horizontal axis of FIG.3 shows time, and T_0 to T_N stand for transmission frame timings. Data held in the transmission queue is transmitted in transmission frame interval units. For example, the transmission queue is assumed to store three items of data of data #1 to #3 shown in FIG.4. FIG.4 shows three items of data of data #1 to #3 stored in the transmission queue. In FIG.3, the present time is T_0. Data #1 in FIG.3 and FIG. 4 allows delay by transmission frame timing T_1 (a delay of one transmission frame interval) and so is represented as Pt = 1. Further, data #2 in FIG.3 allows delay by transmission frame timing T_2 and so is represented as Pt = 2. Similarly, data #3 is represented as Pt = N. Further, "Pt = 0" means that assignment should be carried out immediately.

Furthermore, assignment control information generating section 117, for example, compares the threshold "2" with Pt, and, if the value of Pt is less than 2, decides that the time left for the data in the allowable delay time is short. Further, if the value of Pt is 2 or more, assignment control information generating section 117 decides that the time left for the data in the allowable delay time is long. In this case, when a plurality of items of data with different times left are transmitted to the same communication terminal, the value of Pt for data with the least time left is set as the value of Pt for that same communication terminal. Further, although a case has been described here as an example where the threshold is 2, the threshold is not limited to 2.

FIG. 5 is a flowchart showing schematic processing steps of assignment control information generating section 117.

Assignment control information generating section 117 decides whether the communication terminal is transmitting data for the first time communication or for a second time or subsequent communication (ST1010) . Furhter, if this data is for the first time communication, assignment control information generating section 117 commands the communication terminal to report CQI' s with respect to all subchannels in a channel (ST1020). In ST1010, if data is decided to be for a second time or subsequent communication, assignment control information generating section 117 calculates the time left in the allowable delay time for this data, carries out threshold decision (ST1030), and, if the time left is less than the threshold, that is, if the time left is short, commands the communication terminal to report CQI's with respect to all subchannels (ST1020). In ST1030, if the time left is equal to or longer than the threshold, assignment control information generating section 117 commands the communication terminal this time to report CQI's with respect to only subchannels assigned by frequency assignment (ST1040). In this case, the flow of processing steps of assignment control information generating section 117 will be described in more details later, together with overall processing steps of the base station.

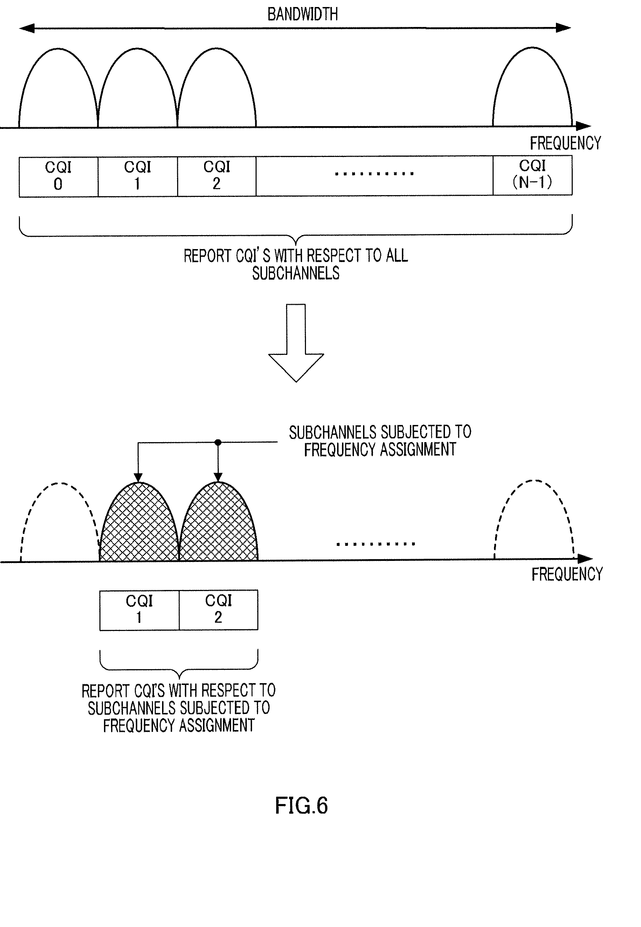

FIG.6 shows in detail how the CQI reported by the communication terminal change according to the above command by the base station.

The upper part of FIG.6 shows subchannels to be reported upon the first CQI report or upon a second time or subsequent CQI report when the time left in the allowable delay time is short. As shown in this figure, if the time left in the allowable delay time is short upon the first CQI report or upon a second time or subsequent CQI report, the communication terminal reports CQI's with respect to all subchannels with subchannel number 0 to (N - 1) included in the bandwidth of the communication channel. For example, if the number of subchannels in the communication band is sixteen and the number of CQI bits is two, the amount of information necessary upon the first CQI report is thirty-two bits. CQI information reported through each subchannel includes MCS bits and SIR information.

The difference from the first CQI report is that, when the time left in the allowable delay time is long upon a second time or subsequent CQI report, as shown in the lower part of FIG.6, the communication terminal reports this time CQI' s with respect to only subchannels with subchannel numbers 1 and 2 assigned by frequency assignment. For example, if the number of CQI bits is two similar to the above, the amount of information necessary upon a second CQI report is four. That is, twenty eight bits are reduced.

In this way, upon a second time or subsequent communication, for data with a long time left in the allowable delay time, the base station commands the communication terminal this time to report CQI's with respect to only subchannels assigned, instead of all subchannels, so that it is possible to reduce the amount of CQI information.

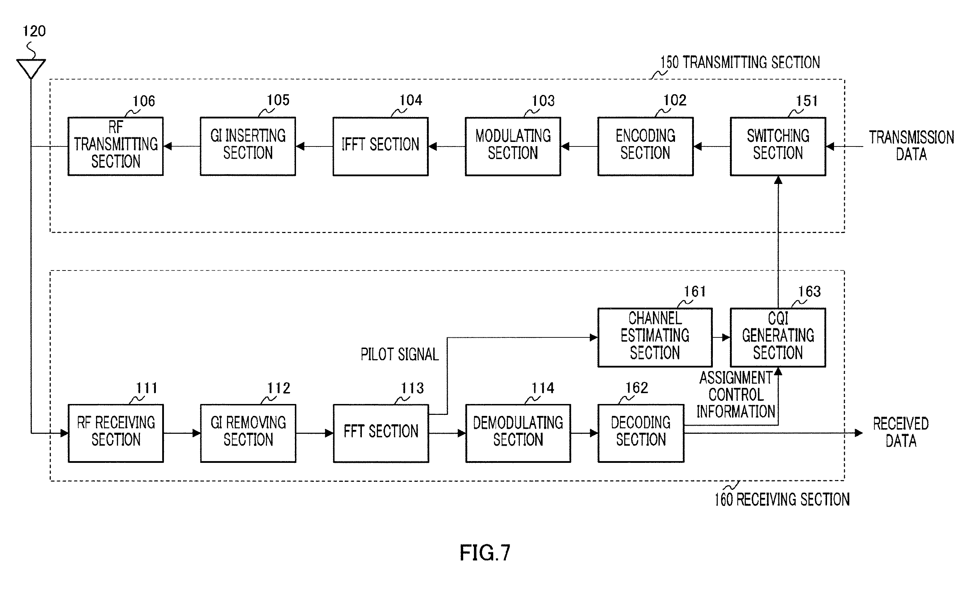

FIG.7 is a block diagram showing a main configuration of a communication terminal apparatus according to this embodiment that communicates with the base station apparatus according to the above embodiment. The same components as in the base station will be assigned the same reference numerals and overlapping descriptions will be omitted.

Switching section 151 in transmitting section 150 and channel estimating section 161, decoding section 162 and CQI generating section 163 in receiving section 160 are different from the base station.

Switching section 151 of transmitting section 150 targets a different signal from switching section 101 of the base station. That is, switching section 151 switches transmission data and a CQI frame outputted from CQI generating section 163 and outputs either information to encoding section 102.

Furthermore, channel estimating section 161 of receiving section 160 estimates channel quality (for example, SIR) on a per subchannel basis, from the pilot signal included in a received signal, and outputs the estimation result to CQI generating section 163. Basic operation of decoding section 162 is similar to decoding section 115 of the base station, but decoding section 162 carries out error correction decoding of a signal subjected to a fast Fourier transform and outputs decoded assignment control information to CQI generating section 163. CQI generating section 163 generates a CQI frame by utilizing channel quality information outputted from channel estimating section 161 and assignment control information outputted from decoding section 162.

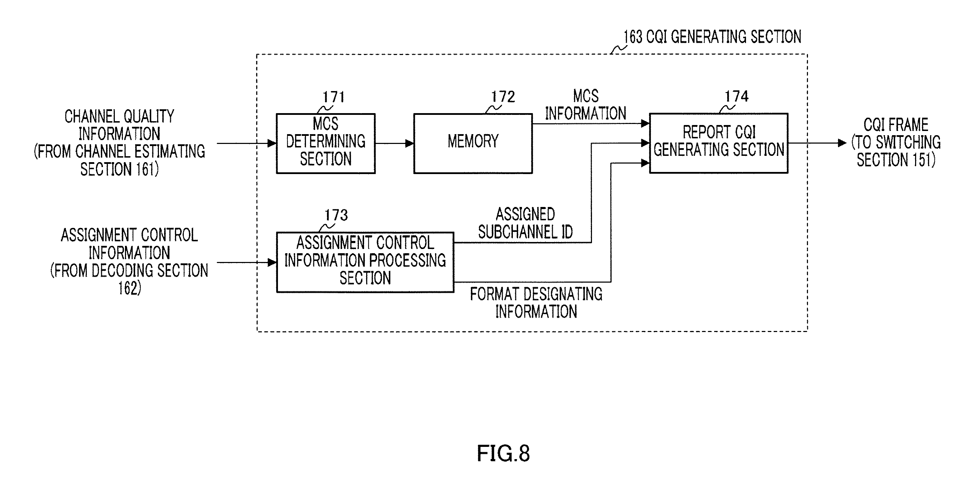

FIG.8 is a block diagram showing a main configuration inside CQI generating section 163.

MCS determining section 171 determines MCS parameters based on channel quality information of each subchannel outputted from channel estimating section 161 and a built-in MCS table. The determined MCS parameters are outputted to memory 172.

Memory 172 holds MCS parameters of each subchannel determined by MCS determining section 171 and subchannel ID matching the MCS parameters and outputs MCS information to report CQI generating section 174 in response to the request.

Assignment control information processing section 173 extracts two items of information of ID information of subchannels subjected to frequency assignment and format designating information for designating the CQI frame format for the next report, out of assignment control information outputted from decoding section 162 and outputs two items of information to report CQI generating section 174.

Report CQI generating section 174 generates a CQI frame based on the assigned subchannel ID, MCS information matching the ID and format designating information. In this case, report CQI generating section 174 generates CQI's with respect to all subchannels upon the first CQI report.

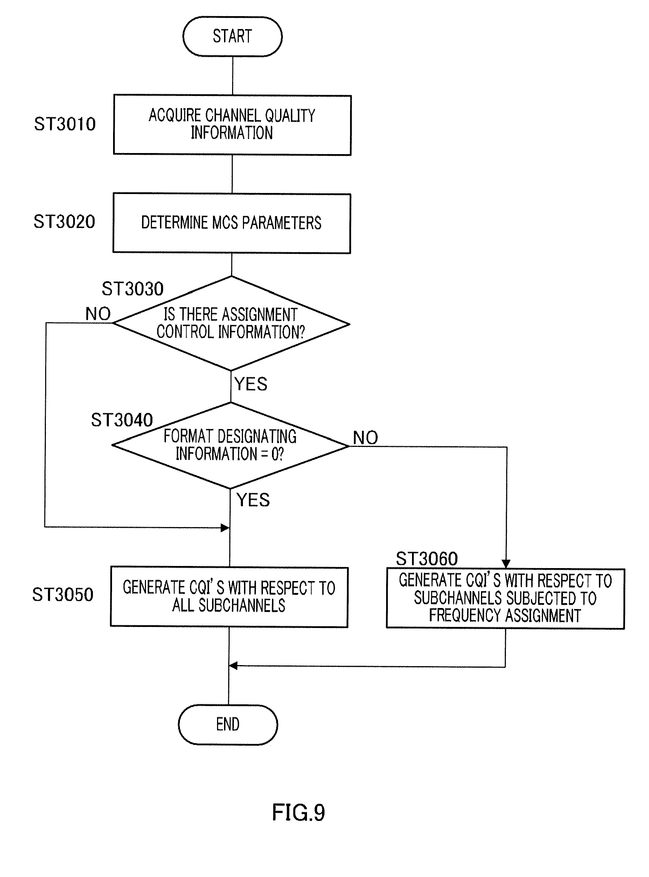

FIG.9 is a flowchart showing processing steps of CQI generating section 163.

CQI generating section 163 acquires channel quality information estimated in channel estimating section 161 (ST3010), compares channel quality information with the MCS table and determines MCS parameters for each subchannel (ST3020).

CQI generating section 163 checks whether assignment control information reported from the base station is already received (ST3030) . If the assignment control information is already received, the flow proceeds to ST3040, and, if the assignment control information is not received, CQI generating section 163 generates CQI's with respect to all subchannels included in the communication band and reports the CQI's (ST3050). In ST3040, it is checked whether format designating information is "0," and, if the format designating information is "0," CQI's are generated with respect to all subchannels (ST3050). If format designating information is not "0," that is, if frame designating information is "1," CQI' s with respect to only subchannels assigned by assignment control information reported from the base station are generated (ST3060).

CQI's reported by the communication terminal apparatus that has the above configuration and carries out the above operation, have already been described with reference to FIG.5.

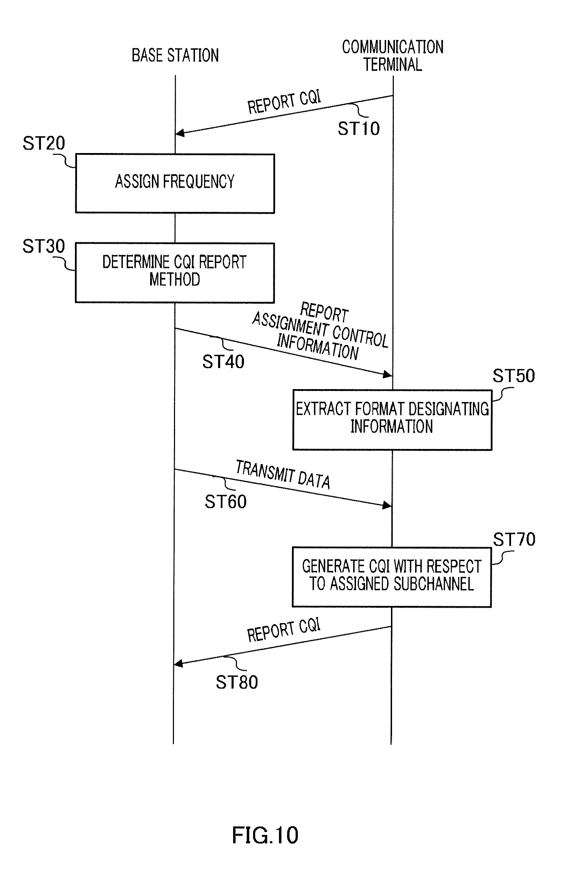

FIG.10 is a sequence diagram showing a series of processings of the base station apparatus and communication terminal according to this embodiment.

The communication terminal receives the pilot signal, estimates channel quality of all subchannels, generates CQI's and transmits the first CQI report to the base station (ST10).

The base station, receiving CQI reports from communication terminals, carries out frequency assignment and determines MCS parameters using these CQI reports (ST20), calculates the time left in the allowable delay time for data for each communication terminal and determines the next CQI report method matching the time left (ST30), and reports assignment control information showing the CQI report method, to each communication terminal (ST40).

The communication terminal, receiving assignment control information, extracts format designating information for designating the next CQI report method, from the assignment control information (ST50).

The base station transmits assignment control information in ST40 and then carries out data transmission to each communication terminal (ST60).

The communication terminal estimates channel quality of all subchannels using the pilot signals and generates CQI' s with respect to only assigned subchannels based on format designating information reported from the base station in ST40 (ST70), and, bythismeans, carries out a second CQI report to the base station (ST80).

Processing of ST20 to ST80 is repeated until communication ends.

Next, supplementary description of operation of the above base station according to this embodiment will be made.

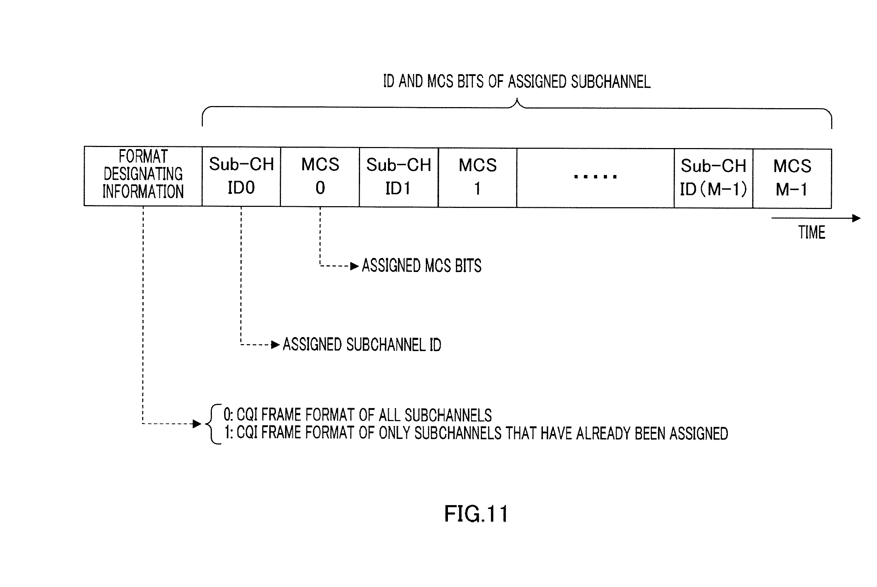

FIG.11 shows an example of a frame format of assignment control information transmitted from the base station apparatus according to this embodiment.

A case will be described here as an example where the number of assigned subchannels is M. As shown in this figure, a frame of assignment control information is formed with three items of information, namely, the format designating information portion, the assigned subchannel ID portion and the assigning MCS parameter portion (i.e. MCS parameters matching assigned subchannel ID's). Although an example has been shown with the example of this figure where format designating information is arranged at the head of a frame and then assigned subchannel ID' s and assigned MCS parameters are alternately arranged, arrangement is not limited to this.

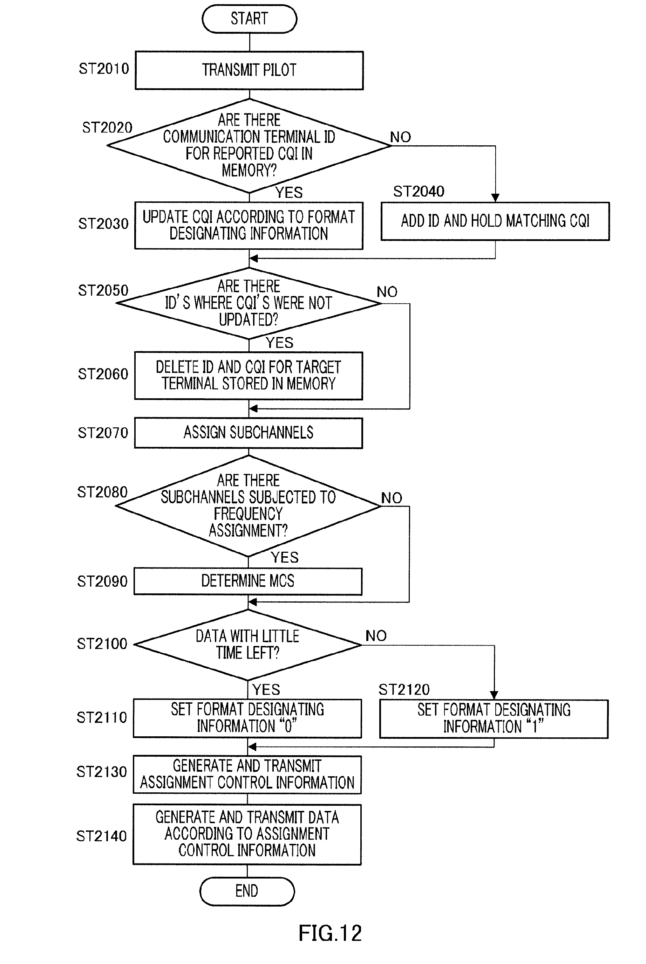

FIG.12 is a flowchart showing a series of processing steps of the base station apparatus according to this embodiment.

First, the base station apparatus according to this embodiment transmits the channel quality estimating pilot symbol (ST2010). Next, it is checked whether a communication terminal ID for the reported CQI is held (stored) in memory 121 (ST2020), and, if the communication terminal ID is already stored in memory 121, the CQI of the target subchannel ID is updated according to format designating information (ST2030). In ST2020, if no communication terminal ID is stored, the communication terminal ID is added to memory 121 anew and holds CQI' s with respect to all subchannels (ST2040).

Next, the base station apparatus according to this embodiment checks whether or not among communication terminal ID' s there are communication terminal ID' s where the CQI's are not updated (ST2050), and, if there are communication terminals where the CQI' s are not updated, deletes the ID and CQI of the target communication terminal from memory 121. As for a communication terminal with a long CQI report period, CQI is updated per period and so communication terminal ID's with different periods are not deleted. In ST2050, if there is no communication terminal where CQI's are not updated, ST2060 is skipped.

Next, the base station apparatus according to this embodiment carries out frequency assignment (subchannel assignment) according to the CQI and the allowable delay time of each communication terminal (ST2070) . Then, the base station apparatus checks whether there are subchannels subjected to frequency assignment on a per communication terminal basis (ST2080), and, if there are communication terminals using subchannels subjected to frequency assignment, compares the CQI's with the MCS table and determines MCS parameters matching assigned subchannel ID's (ST2090). In ST2080, if no subchannel is subjected to frequency assignment in the communication terminal, ST2090 is skipped.

Next, the base station apparatus according to this embodiment decides the time left in the allowable delay time for data for each communication terminal (ST2100), if it is decided that the time left is short, sets format designating information "0" (ST2110), and, if it is decided that the time left is long, sets format designating information "1" (ST2120).

Then, the base station apparatus according to this embodiment generates assignment control information by combining an assigned subchannel ID for each communication terminal, MCS parameters of the subchannel matching this ID and format designating information and transmits assignment control information to each communication terminal (ST2130), and generates downlink transmission data according to the assignment control information of each communication terminal and transmits the data (ST2140).

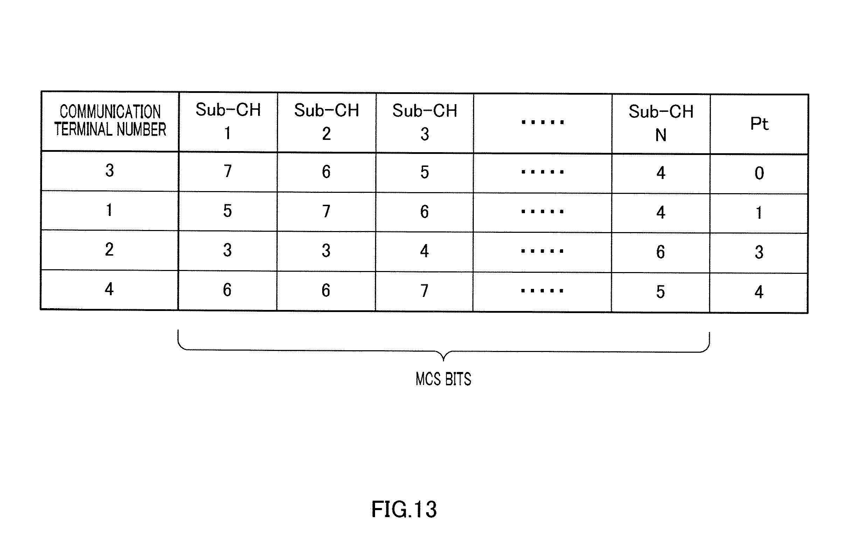

FIG.13 shows an example of a frequency assignment management table used upon frequency assignment. A case will be described here where the number of communication terminals is four.

The base station apparatus according to this embodiment generates the MCS table based on the CQI (MCS bits) of each communication terminal and packet timeout value Pt representing the time left in the allowable delay time. This MCS table arranges packet timeout values of communication terminals that report CQI's, in order of small values. The base station apparatus according to this embodiment carries out frequency assignment in order of subchannels (Sub-CH) with good received quality (i.e. larger MCS bits) by using this table.

For example, if one subchannel is assigned to each communication terminal, Sub-CH #1 is assigned to communication terminal 1 #3, Sub-CH #2 is assigned to communication terminal #1, Sub-CH #N is assigned to communication terminal #2 and Sub-CH #3 is assigned to communication terminal #4.

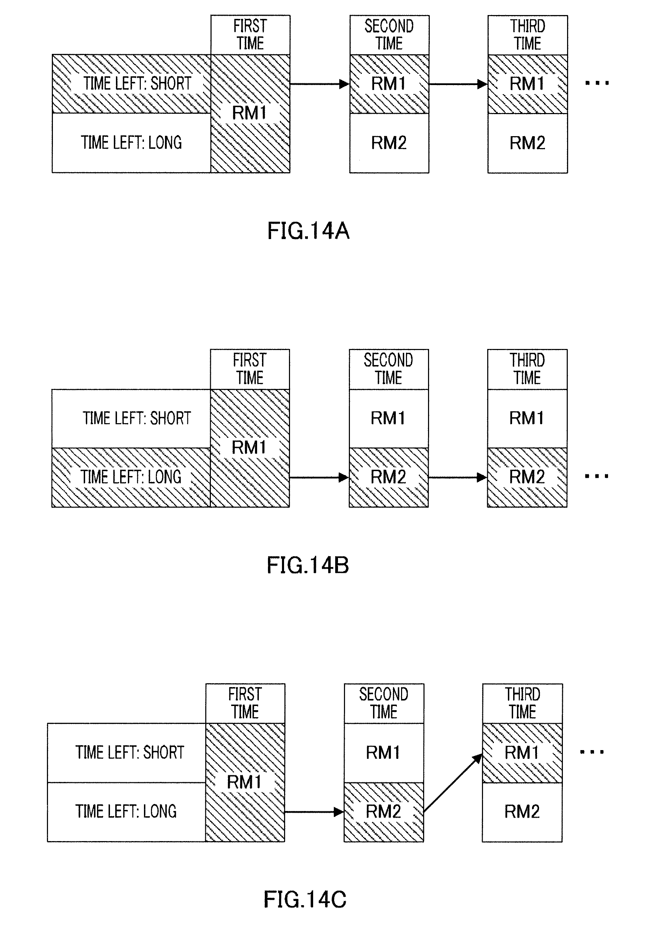

FIGS. 14A to C illustrate how CQI report methods switch according to this embodiment. In this case, "RM1" (Report Method 1) refers to a CQI report method for reporting CQI's with respect to all subchannels, "RM2" (Report Method 2) refers to a CQI report method for reporting CQI's with respect to only subchannels assigned by frequency assignment and the CQI report method actually selected is shown by diagonal lines.

FIG.14A shows a case where data for a communication terminal is decided to have little time left in the allowable delay time for that data upon all of the first to the third CQI reports. In this case, the communication terminal reports CQI' s with respect to all subchannels upon the first CQI report, irrespective of whether the time left is short or long, reports CQI's with respect to all subchannels upon a second CQI report similar to the first CQI report. The communication terminal does the same upon a third CQI report.

FIG. 14B shows a case where the time left in the allowable delay time for data for a communication terminal is long upon the first to third CQI reports. In this case, the communication terminal reports CQI's with respect to all subchannels upon the first CQI report, irrespective of whether the time left is short or long. However, upon a second CQI report, the communication terminal reports CQI's with respect to only subchannels, for example, subchannels #2, #3 and #4 assigned by frequency assignment by the base station. Upon a third CQI report, the communication terminal reports CQI' s with respect to only subchannels assigned by frequency assignment by the base station. In this case, upon a second CQI report, the communication terminal reports CQI's with respect to only subchannels #2, #3 and #4, and so the base station carries out a second frequency assignment out of these three subchannels. The number of subchannels subjected to the second frequency assignment by the base station is likely to decrease to below three. Consequently, upon a third CQI report, the number of CQI's reported by the communication terminal is likely to be less than three.

FIG. 14C shows a case where the result of deciding the time left for data for a communication terminal changes following the time passed. That is, although this data is decided to have a long time left upon the first and second CQI reports, upon a third CQI report, the data is decided to have a short time left due to the time passed. In this way, the CQI report method is changed from RM1 to RM2. The time left for this data becomes much shorter after a fourth CQI report, and so RM1 is selected. In this way, according to the present invention, the CQI report method is changed with the time passed to satisfy the allowable delay time and reduce the amount of CQI information to be reported.

As described above, according to this embodiment, the base station commands a communication terminal, which receives data having a long time left in the allowable delay time, that is, data with a margin in the time left, to report CQI's with respect to only subchannels already assigned upon a second time or subsequent CQI report. On the other hand, for data having little time left, that is, data with little margin in the time left, the base station commands the communication terminal to report CQI's with respect to all subchannels. In this way, by limiting subchannels of the CQI report target, it is possible to reduce the amount of CQI information, change CQI report methods between communication terminals with high QoS and communication terminals with moderate QoS, and, consequently, satisfy QoS at ease. In this way, it is possible to improve overall frequency efficiency in uplink.

If frequency assignment is carried out with respect to data with no margin of the time left in the allowable delay time, it is possible to satisfy QoS by commanding a communication terminal to report CQI's with respect to all subchannels with respect to this data. Further, if degree of freedom in frequency assignment is more or less decreased, it is expected that, when the time left in the allowable delay time for data has a margin, the data can satisfy the allowable delay time, QoS, as a result.

Further, in this embodiment, the base station is able to decide the time left in the allowable delay time for data for a communication terminal at ease, because the base station learns the time passed in the transmission queue at ease.

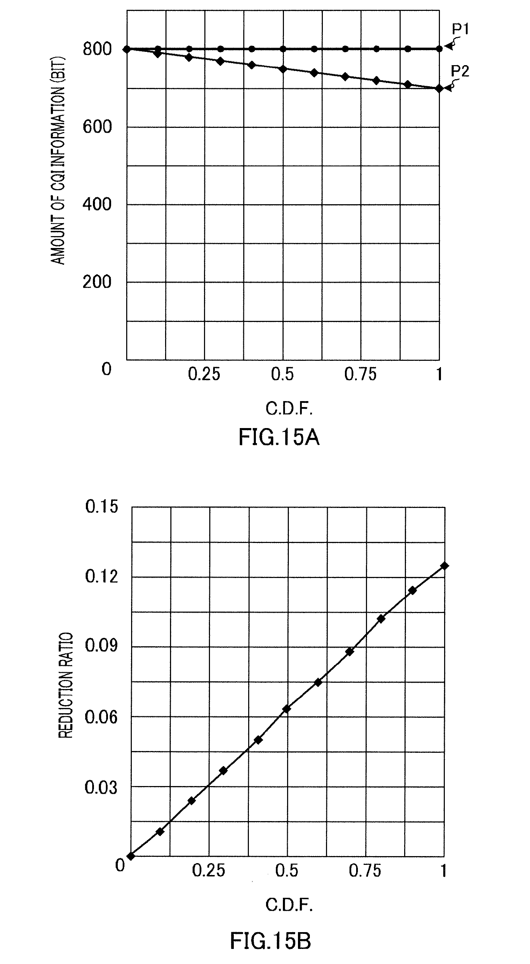

FIG. 15A and FIG.15B show results of evaluating the effect of this embodiment quantitatively. The evaluation condition is that the number of communication terminals is ten, the number of subchannels is thirty two, the number of MCS representation bits is five and the number of transmission frames is five.

FIG.15A is a graph showing the total amount of CQI information for all communication terminals to the occupancy ratio(i.e. C.D.F) of communication terminals to which data with a long time left in the allowable delay time is transmitted. Plot p1 shows a result of a conventional scheme and plot p2 shows a result according to this embodiment. Further, FIG.15B is a graph showing the ratio of reduction in the amount of CQI information to C.D.F. In this way, according to this embodiment, it is possible to reduce the amount of CQI information by thirteen percent at maximum.

### (Embodiment 2)

The base station apparatus according to Embodiment 2 of the present invention commands a communication terminal with a low transmission rate to report CQI's with respect to a predetermined number of subchannels with good received quality.

The basic configuration of the base station according to this embodiment is the same as the base station apparatus described in Embodiment 1, and so overlapping descriptions will be omitted and the assignment control information generating section with a different configuration will be described. Further, the basic configuration is the same, but reference numerals of components having a little difference in details will be assigned small letters in alphabet.

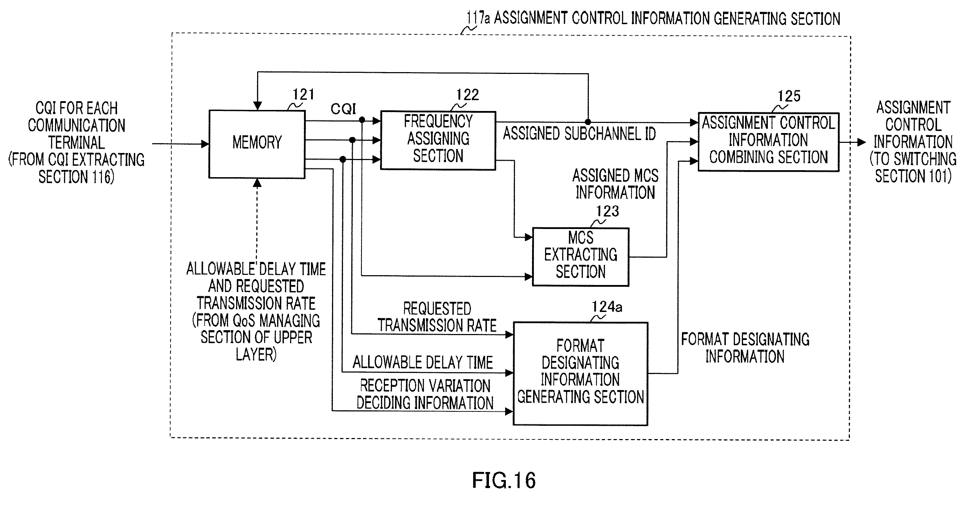

FIG.16 is a block diagram showing a main configuration of assignment control information generating section 117a according to this embodiment. Further, assignment control information generating section 117a has the same basic configuration as assignment control information generating section 117 described in Embodiment 1 and so the same components will be assigned the same reference numerals and overlapping descriptions will be omitted.

Assignment control information generating section 117a determines frequency assignment, MCS parameters and format designating information utilizing the CQI of each communication terminal outputted from CQI extracting section 116, the allowable delay time and requested transmission rate for received data. Differences from Embodiment 1 include outputting two parameters of the allowable delay time and requested transmission rate from the QoS managing section of the upper layer and including reception variation deciding information showing the condition of the variation in reception in CQI report from each communication terminal.

CQI extracting section 116 outputs CQI (i.e. MCS parameters and reception variation deciding information) from each communication terminal to memory 121. As for the above requested transmission rate, memory 121 acquires requested transmission rate for received data for each communication terminal from the QoS managing section (not shown) of upper layer, records this requested rate and outputs this rate to frequency assigning section 122 and format designating information generating section 124a in response to the request. Further, memory 121 outputs reception variation deciding information to format designation information generating section 124a. Frequency assigning section 122 carries out frequency assignment taking into account the requested transmission rate of each communication terminal. Format designating information generating section 124a determines format designating information using three parameters of the time left, requested transmission rate and reception variation deciding information.

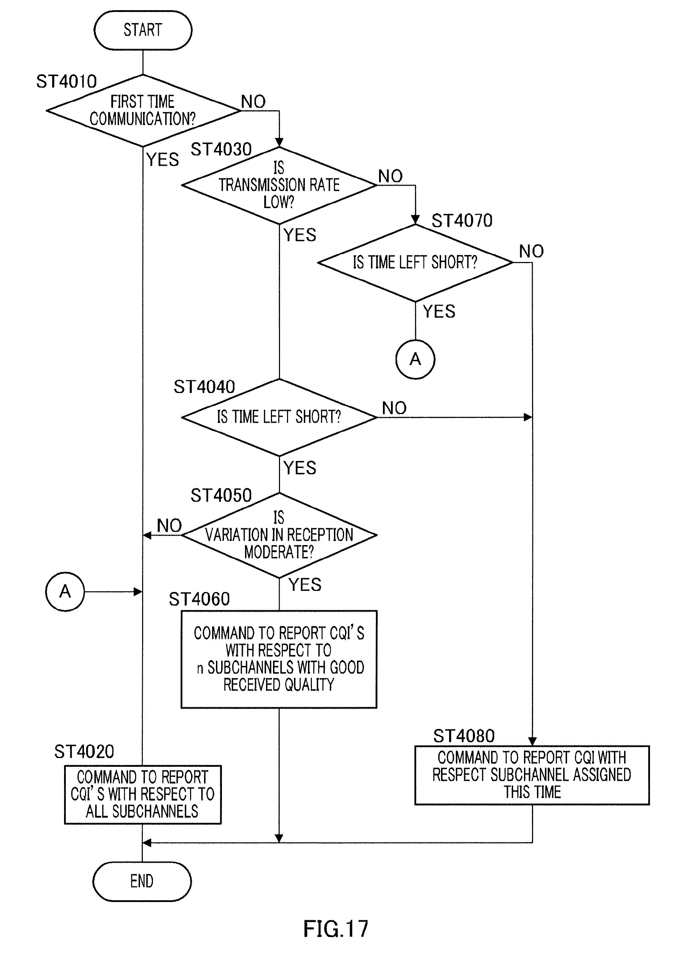

FIG.17 is a flowchart showing schematic processing steps of assignment control information generating section 117a.

Assignment control information generating section 117a decides whether a communication terminal is transmitting data for the first time communication or for a second time or subsequent communication (ST4010). In this case, if this data is for the first time communication, assignment control information generating section 117a commands the communication terminal to report CQI's with respect to all subchannels in a channel (ST4020).

If the data is decided to be for a second time or subsequent communication in ST4010, assignment control information generating section 117 carries out threshold decision of the requested transmission rate for this data and the first threshold (ST4030). If the transmission rate is decided to be less than the first threshold, that is, if the transmission rate is decided to be low, assignment control information generating section 117 calculates the time left in the allowable delay time for this data, and carries out threshold decision of the time left using the second threshold (ST4040). If the time left is decided to be less than the second threshold, that is, if the time left is decided to be short, assignment control information generating section 117 carries out threshold decision of the variation in reception using the third threshold (ST4050). If the variation in reception (i.e. a distribution value of the received SIR of each subchannel is used as the variation in reception) is decided to be less than the third threshold, that is, if the variation in reception is decided to be moderate, assignment control information generating section 117 commands a communication terminal to report CQI's with respect to n subchannels with good received quality, to be more specific, commands the communication terminal to select n subchannels in order of good received quality and report selected subchannel ID' s and CQI' s with respect to the subchannels matching the ID's (ST4060). If the variation in reception is decided not to be moderate, the flow proceeds to ST4020. The variation in reception is decided to be moderate or severe to allow a communication terminal, receiving data with a low transmission rate, to select the CQI report method between "reporting CQI' s with respect to all subchannels" and "selecting n subchannels in order of good received quality and reporting CQI's with respect to these selected subchannels."

If the transmission rate is decided to be high in ST4030, assignment control information generating section 117a carries out threshold decision of the time left in the allowable delay time for this data using a second threshold (ST4070). If the time left is decided to be short, the flow proceeds to ST4020, and, if the time left is decided to be long, assignment control information generating section 117a commands a communication terminal to report CQI's with respect to only subchannels assigned this time by frequency assignment (ST4080). Further, if the time left is decided to be long in ST4040, the flow proceeds to ST4080.

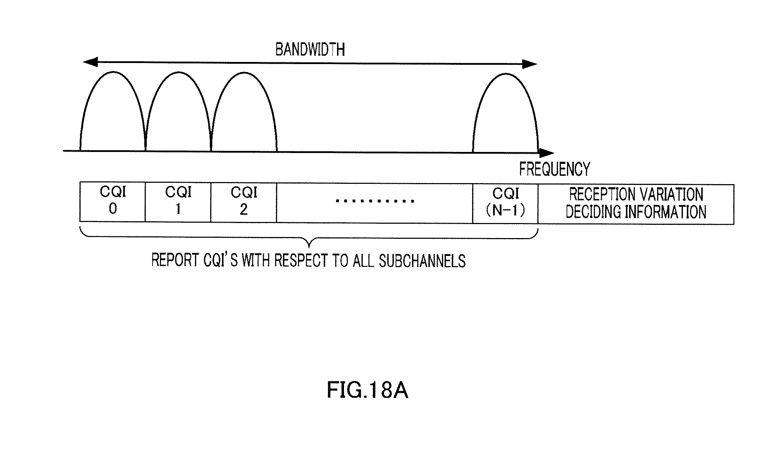

FIGs. 18A to C show detailed differences in CQI reports from a communication terminal according to the above command of the base station.

FIG.18A shows subchannels to be reported by the CQI report method in ST4020. The communication terminal reports CQI's with respect to all subchannels with subchannel numbers 0 to (N - 1) included in the bandwidth of the communication channel and reception variation deciding information.

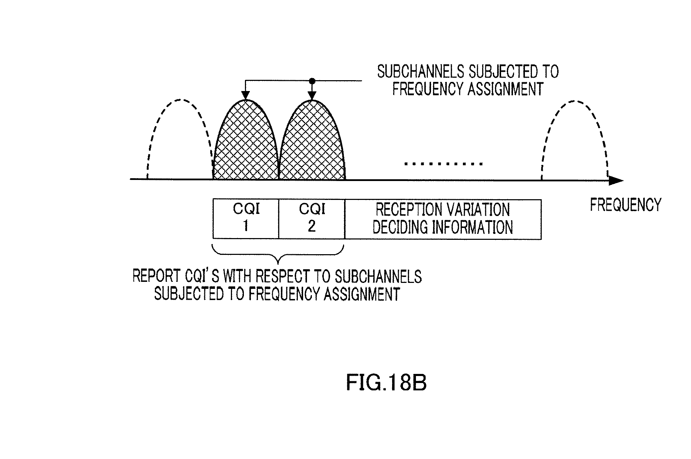

FIG.18B shows subchannels to be reported by the CQI report method in ST4080. The communication terminal reports this time CQI's with respect to only subchannels (subchannel number 1 and 2) that are assigned by frequency assignment and reception variation deciding information.

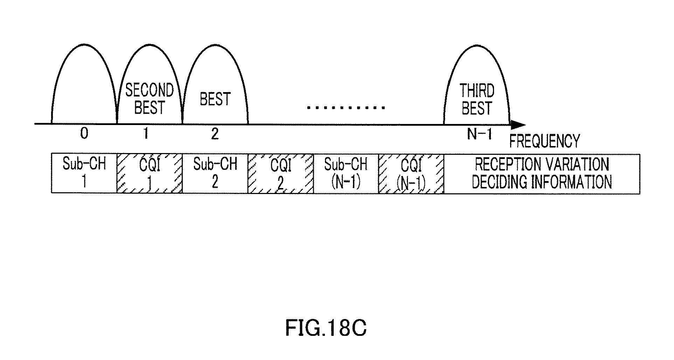

FIG.18C shows subchannels to be reported by the CQI report method in ST4060. The communication terminal selects n subchannels (where n is 3) in order of good received quality and reports subchannel ID's of selected subchannels (subchannel number 1, 2 and N-1), CQI' s matching these ID's and reception variation deciding information. Further, in the example of FIG.18C, n is 3, but this value is by no means limiting.

The frame format of assignment control information transmitted from the base station apparatus according to this embodiment is the same as in Embodiment 1 except that "2" is added to format designating information, that is, information showing "report CQI' s with respect to n subchannels selected in order of good received quality" is added.

Whether the requested transmission rate is high or low is decided using the number of requested assigning subchannels. For example, if the number of requested assigning subchannels is less than two, the requested transmission rate for data is decided to be low. Further, if the number of requested assigning subchannels is two or more, the requested transmission rate for data is decided to be high.

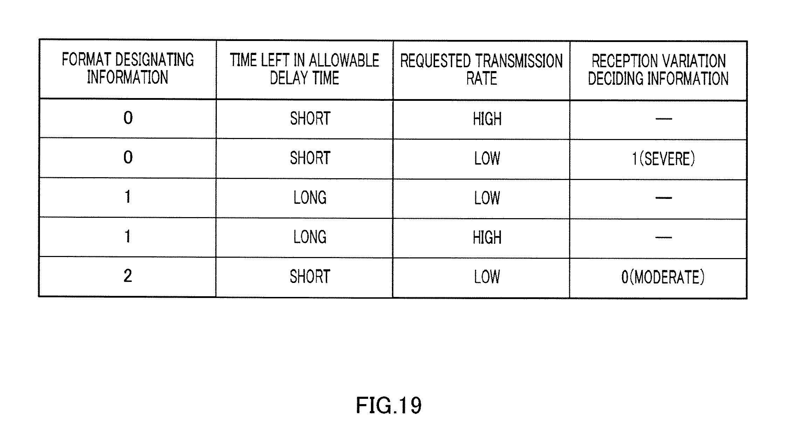

FIG. 19 shows relationships between format designating information, the time left in the allowable delay time, requested transmission rate, and reception variation deciding information, according to this embodiment.

Further, "reception variation deciding information" shows the magnitude of the variation in reception of each communication terminal. To be more specific, "0" shows the moderate condition of the variation in reception and "1" shows the severe condition of the variation in reception. The "-" symbol shown in the column of reception variation deciding information in FIG.19 means that either "0" or "1" may be used.

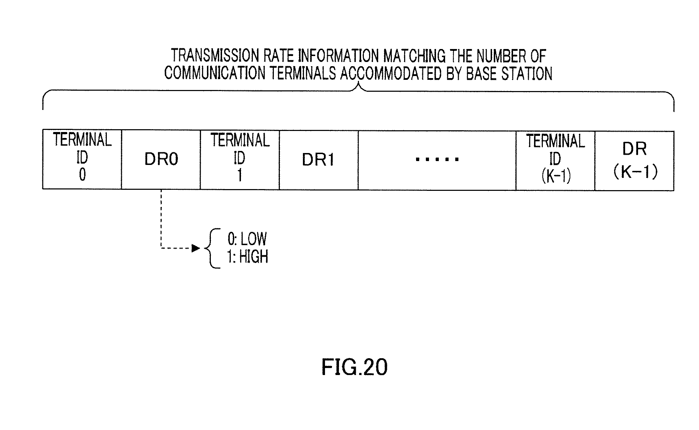

FIG.20 shows a frame format for reporting transmission rate information transmitted from the base station according to this embodiment. The base station reports whether the requested transmission rate is high or low to each communication terminal using this frame format.

In this case, when the transmission rate is reported, scheduling information (assignment control information, modulation parameters, data size and information required for data demodulation) subjected to reception processing prior to data transmission, may be reported using other control channels.

Next, a communication terminal according to this embodiment will be described.

The communication terminal according to this embodiment has the same basic configuration as the communication terminal described in Embodiment 1 and so overlapping descriptions will be omitted except that decoding section 162 outputs requested transmission rate information in addition to assignment control information to CQI generating section 163a (the same configuration as CQI generating section 163).

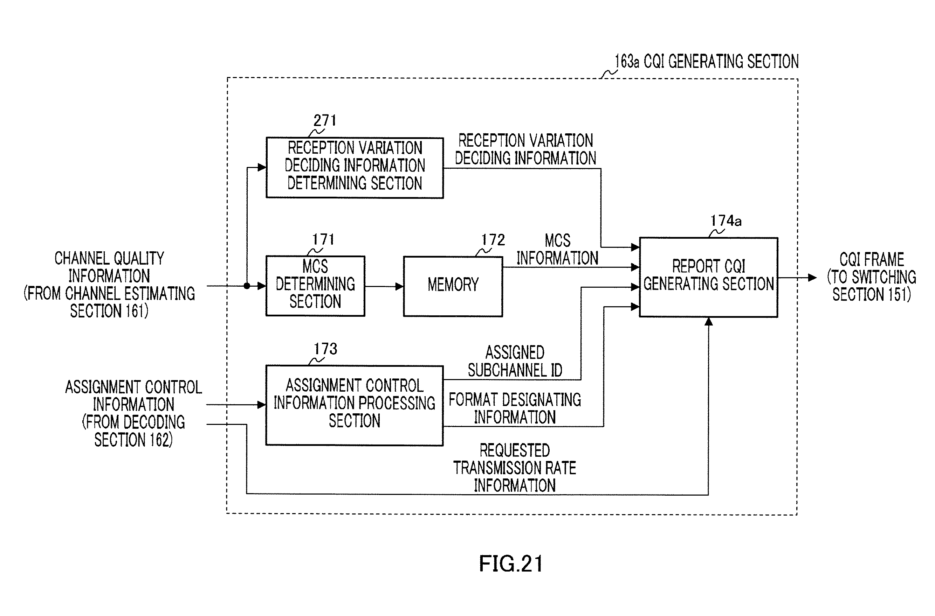

FIG.21 is a block diagram showing a main configuration inside CQI generating section 163a according to this embodiment. The same components as in CQI generating section 163 described in Embodiment 1 will be assigned the same reference numerals and overlapping descriptions will be omitted.

Reception variation deciding information determining section 271 calculates the average and distribution of channel quality information (SIR value) per subchannel outputted from channel estimating section 161. Reception variation deciding information determining section 271 determines reception variation deciding information ("0" or "1") based on the calculated SIR distribution value and outputs the result to report CQI generating section 174a.

In this embodiment, the communication terminal reports reception variation information as a parameter representing the magnitude of the variation in reception in the communication terminal in addition to MCS parameters upon CQI report. Reception variation deciding information determining section 271 determines reception variation deciding information based on SIR distribution values of all subchannels.

When reception variation deciding information is determined, for example, if the received SIR distribution values of all subchannels is less than 3.0, the variation in reception is decided to be moderate and reception variation deciding information is set to "0." Further, if the received SIR distribution values of all subchannels are equal to or greater than 3.0, the variation in reception is decided to be severe and reception variation deciding information is set to "1."

Report CQI generating section 174a generates a CQI frame according to format designating information. Further, upon the first CQI report, the CQI is generated based on the requested transmission rate and reception variation deciding information alone.

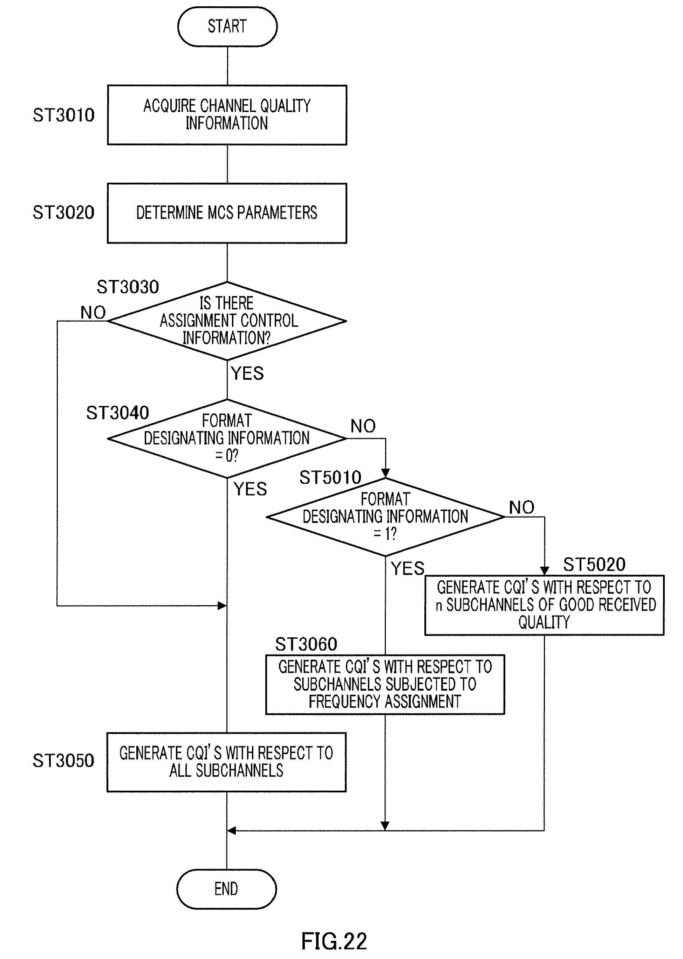

FIG.22 is a flowchart showing processing steps of CQI generating section 163a. Different steps from the flow of CQI generating section 163 described in Embodiment 1 will be described.

If format designating information is not "0" in ST3040, CQI generating section 163a decides whether format designating information is "1" (ST5010), and, if format designating information is "1," generates CQI' s with respect to only subchannels assigned according to assignment control information reported from the base station (ST3060). If format designating information is not "1," that is, if format designating information is "2," CQI generating section 163a generates CQI's with respect to n subchannels with good received quality (ST5020).

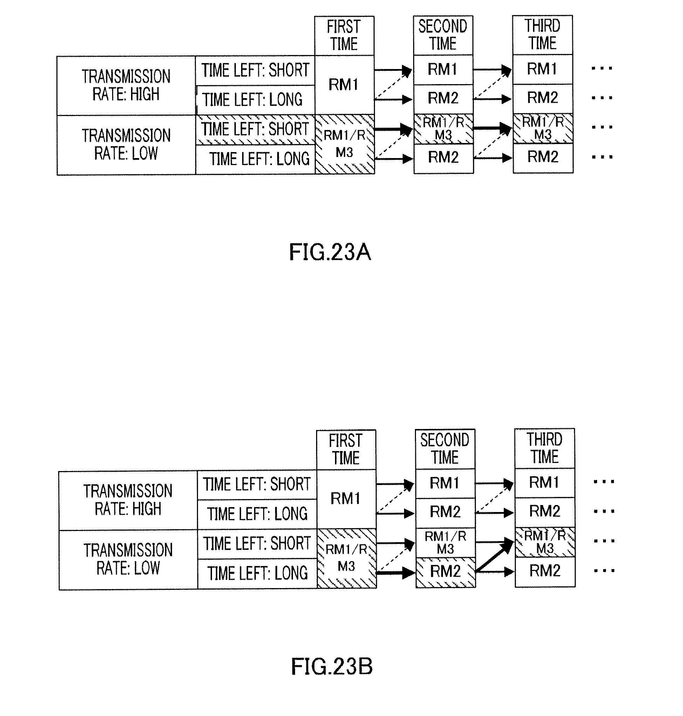

FIG.23A and FIG.23B illustrate how CQI report methods switch according to this embodiment.

In this case, RM1 and RM2 are as described in Embodiment 1, "RM3" refers to a CQI report method for reporting CQI' s with respect to n subchannels selected in order of good received quality and the CQI report method actually selected is shown by diagonal lines. Differences from Embodiment 1 include taking into account the requested transmission rate in addition to the time left and allowing cases where either RM1 or RM3 is selected. Details are the same as in Embodiment 1 and overlapping descriptions will be omitted.

In this way, according to this embodiment, if the requested transmission rate for data is low, CQI' s reported by a communication terminal are limited to subchannel ID's equaling the number of n subchannels selected in order of good received quality from all subchannels and CQI's with respect to the subchannels matching the ID's. As a result, it is possible to satisfy the transmission rate of a communication terminal, reduce the amount of CQI information, and, consequently, improve uplink communication efficiency.

Further, according to this embodiment, if the transmission rate of a communication terminal is decided to be low, the communication terminal reports CQI' s with respect to only n subchannels selected in order of good received quality from all subchannels and report the ID' s of these n subchannels.

When the time left in the allowable delay time and transmission rate of a communication terminal is decided to be short and low, even if the communication terminal reports CQI's with respect to all subchannels, few subchannels are actually assigned. As described above, CQI' s with respect to only subchannels with good received quality among all subchannels are reported, so that subchannels actually subjected to frequency assignment are more likely to show good received quality and reduce the amount of CQI information.

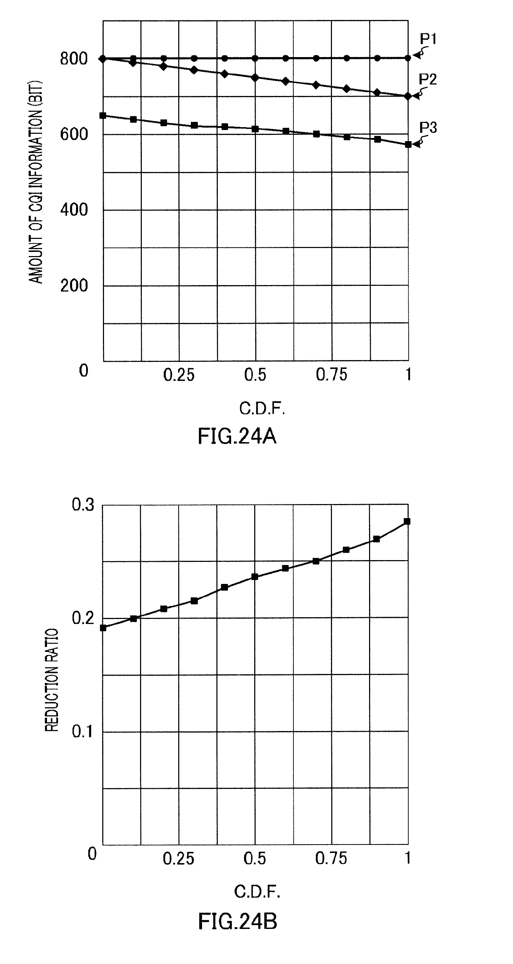

FIG.24A and FIG.24B show results of evaluating the effect of this embodiment quantitatively. Similar to Embodiment 1, the evaluation condition is that the number of communication terminals is ten, the number of subchannels is thirty two, the number of MCS representation bits is five and the number of transmission frames is five.

FIG.24A is a graph showing the total amount of CQI information for all communication terminals to occupation ratio (C.D.F) of communication terminals to which data with a long time left in the allowable delay time is transmitted. Plots p1 and p2 are as described in Embodiment 1, and plot p3 shows the result according to this embodiment. Further, FIG.24B is a graph showing the ratio of reduction in the amount of CQI information to C.D. F. In this way, according to this embodiment, it is possible to reduce the amount of CQI information by twenty nine percent at maximum.

### (Embodiment 3)

The base station apparatus according to Embodiment 3 of the present invention includes more format designating information than the base station apparatus described in Embodiment 2, that is, more variations of CQI report methods.

To be more specific, in addition to Embodiment 2, in CQI report methods and format designating information, format designating information "3" for designating "the CQI report method for reporting CQI's with respect to subchannels already assigned and CQI' s with respect to n subchannels with good quality outside the assigned band and format designating information "4" for designating "the CQI report method for reporting CQI' s with respect to the same subchannels as in the previous CQI report" are further added.

Further, the base station apparatus according to this embodiment includes more variations in reception variation deciding information compared to Embodiment 2.

To be more specific, although reception variation deciding information takes two values of "0 (moderate variation in reception)" and "1 (severe variation in reception)" in Embodiment 2, reception variation deciding information takes three values of "0," "1" and "2" in this embodiment. "0" shows a moderate condition of the variation in reception, "1" shows a less severe condition of the variation in reception and "2" shows a severe condition of the variation in reception. That is, a medium value (a less severe condition of the variation in reception) is provided as an additional variation. According to this embodiment, to decide the CQI report method (three items of format designating information "0, " "2" and "4") for a communication terminal that has a low transmission rate and that is to receive data with little time left in the allowable delay time, the level of reception variation deciding information showing "a less severe condition of the variation in reception" is provided anew. Further, the same processing is carried out to decide the CQI report method (three items of format designating information "1," "3" and "4") for a communication terminal that has a high transmission rate and that is to receive data with a long time left in the allowable delay time.

Further, the base station apparatus according to this embodiment has the same basic configuration as the base stations described in Embodiments 1 and 2 and overlapping descriptions will be omitted.

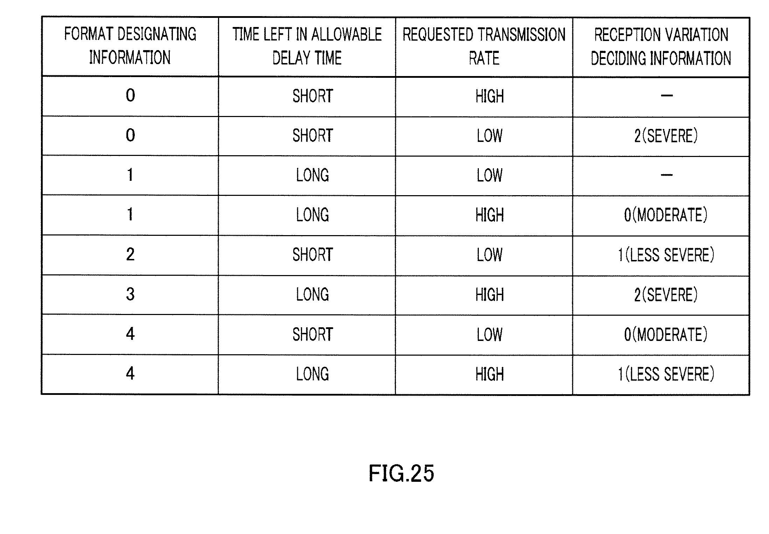

FIG.25 shows relationships between format designating information, the time left in the allowable delay time, requested transmission rate and reception variation deciding information according to this embodiment. The "-" symbol shown in the column of reception variation deciding information in this figure means that either "0," "1" or "2" may be used.

For example, if the variation in reception at a communication terminal that receives data having a margin of the time left in the allowable delay time and requiring a high transmission rate, is decided to be severe, the base station apparatus transmits format designating information "3" to this communication terminal. In this way, this communication terminal carries out CQI report to the base station by combining CQI' s with respect to already assigned subchannels, subchannel ID's equaling the number of n subchannels with good received quality outside the assigned band and CQI's with respect to subchannels matching the ID' s . Further, if the variation in reception at a communication terminal that receives data having a margin of the time left in the allowable delay time and requiring a high transmission rate, is decided to be less severe, the base station transmits format designating information "4" to this communication terminal. For this reason, this communication terminal reports the CQI with respect to the same subchannel as in the previous CQI report, to the base station.

Further, if the variation in reception at a communication terminal 1 that receives data having no margin of the time left in the allowable delay time and requiring a low transmission rate, is decided to be moderate, the base station apparatus transmits format designating information "4" to this communication terminal. For this reason, this communication terminal reports the CQI with respect to the same subchannel as in the previous CQI report, to the base station. Further, if the variation in reception at the communication terminal that receives data having no margin of the time left in the allowable delay time and requiring a low transmission rate, is decided to be less severe, the base station transmits format designating information "2" to this communication terminal. CQI report of format designating information "2" is described in Embodiment 2 and will not be described in details in this embodiment.

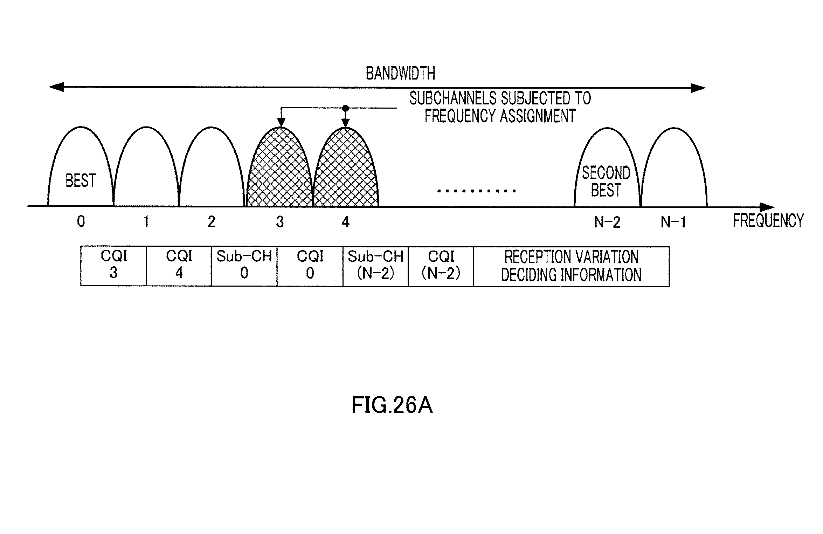

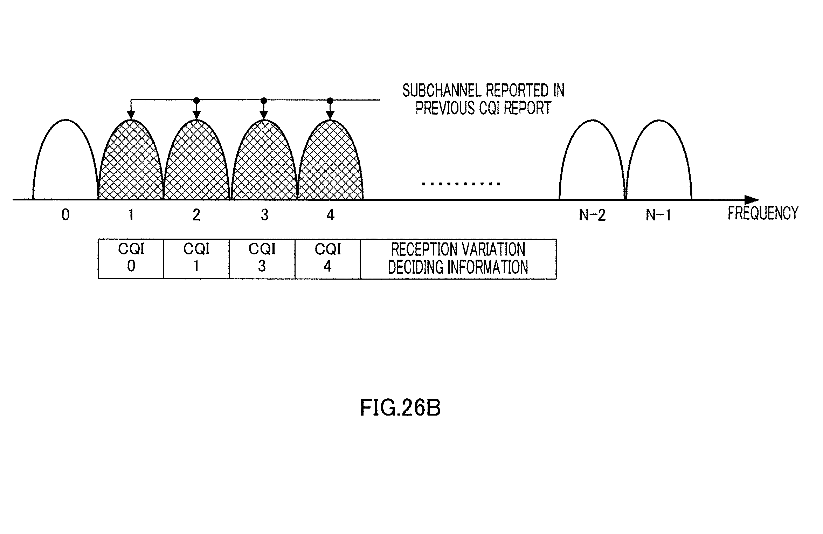

FIG.26A and FIG. 26B show detailed differences in CQI reports from a communication terminal according to the above command of the base station.

FIG.26A shows subchannels to be reported by the CQI report method according to format designating information "3." The communication terminal selects CQI's with respect to subchannels with subchannel numbers 3 and 4 assigned by frequency assignment and two subchannels (0 and N - 2) selected in order of good received quality outside the frequency assigned band and reports CQI's with respect to these two subchannels, information Sub-CHO and Sub-CH (N - 1) for identifying the selected subchannels and reception variation deciding information.

FIG. 26B shows subchannels to be reported by the CQI report method according to format designating information "4." The communication terminal reports CQI's with respect to the same subchannels 1 to 4 as subchannels 1 to 4 reported in the previous CQI report and reception variation deciding information.

Next, the communication terminal according to this embodiment will be described.

The communication terminal according to this embodiment has the same basic configuration as the communication terminals described in Embodiments 1 and 2, and so overlapping descriptions will be omitted.

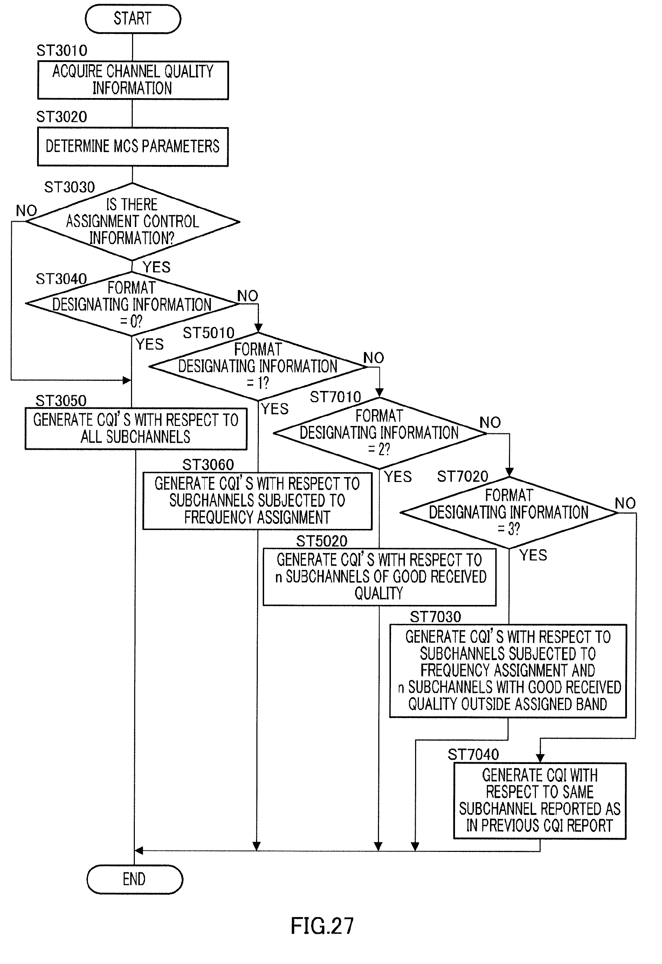

FIG.27 is a flowchart showing processing steps of the CQI generating section. The different flows from Embodiments 1 and 2 will be described.

If format designating information is not "1" in ST5010, the CQI generating section decides whether format designating information is "2" (ST7010), and, if format designating information is "2," generates CQI's with respect to n subchannels with good received quality (ST5020). If format designating information is not "2," the CQI generating section decides whether format designating information is "3" (ST7020), and, if format designating information is "3," generates CQI's with respect to subchannels assigned by the base station and n subchannels with good received quality outside the assigned band (ST7030). If format designating information is not "3," that is, format designating information is "4," the CQI generating section generates the CQI with respect to the same subchannel as in the previous CQI report (ST7040).

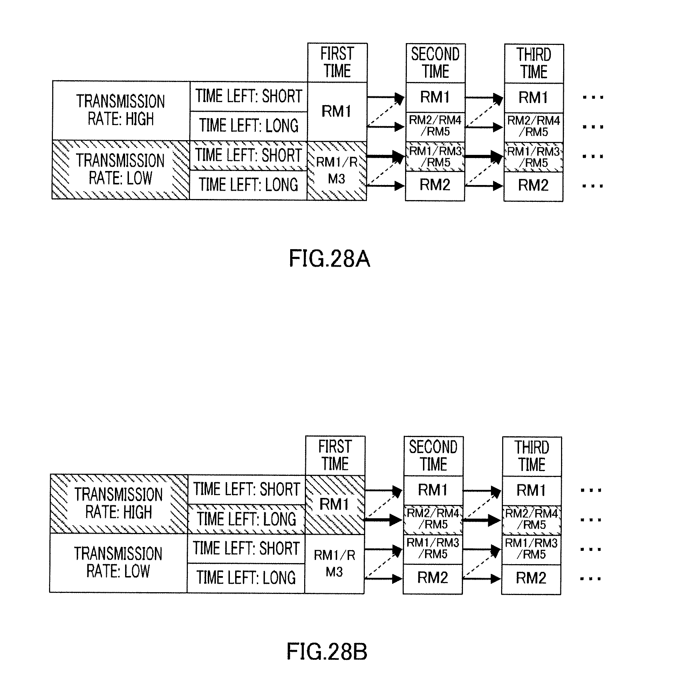

FIG.28A and FIG.28B illustrate how CQI report methods switch according to this embodiment.

In this case, RM1 to RM3 are as described in Embodiments 1 and 2. "RM4" refers to a CQI report method for reporting CQI's with respect to subchannels subjected to frequency assignment and CQI's with respect to n subchannels selected in order of good received quality outside the assigned band, and "RM5" refers to a CQI report method for reporting the CQI with respect to the same subchannel as the subchannel reported in the previous CQI report. This embodiment differs from Embodiment 2 in assuming a case where RM1 to RM5 are used together.

In this way, according to this embodiment, the base station apparatus commands a communication terminal to report CQI's with respect to n subchannels selected in order of good received quality from subchannels not subjected to frequency assignment, in addition to CQI's with respect to subchannels subjected to frequency assignment, so that it is possible to improve degree of freedom in selecting subchannels upon assignment of data with a long allowable delay time and a high requested transmission rate.

Further, according to this embodiment, the base station commands a communication terminal with a high transmission rate and a long time left in the allowable delay time, to report the CQI with respect to the same subchannels as the subchannel reported in the previous CQI report. In this case, it is possible to improve degree of freedom in selecting subchannels upon frequency assignment.

For example, according to this embodiment, although with a communication terminal where the time left is continuously decided to be long, the available subchannel domain (degree of freedom in selecting subchannels) is likely to narrow gradually, it is possible to keep degree of freedom in selecting subchannels upon frequency assignment by providing the above configuration.

Embodiments of the present invention have been described.

The base station apparatus, communication terminal apparatus and multicarrier communication method according to the present invention are not limited to the above embodiments and can be realized by variously changed embodiments. Embodiments can be realized by accurately combining one another.

For example, a plurality of CQI report methods have been described in embodiments. Furthermore, in view of embodiments, the present invention can be alternately referred to as the invention that uses a plurality of predetermined CQI report methods by switching the methods based on the time left in the allowable delay time of transmission data for each communication terminal, transmission rate and channel environment.

For example, according to Embodiment 1, if the time left is decided to be long in the previous CQI report and the time left in the allowable delay time is decided to be short upon the CQI report this time, the communication terminal switches to the setting for "reporting CQI's with respect to all subchannels."

Further, according to Embodiment 2, if the time left is decided to be long in the allowable delay time in the previous CQI report and the time left in the allowable delay time is decided to be short upon the CQI report this time, the communication terminal switches to one of the setting for "reporting CQI' s with respect to all subchannels" and the setting for "reporting CQI' s with respect to n subchannels selected in order of good received quality."

Furthermore, according to Embodiment 3, if the time left in the allowable delay time in the previous CQI report and the transmission rate are decided to be short and low, the communication terminal switches to one of the setting for "reporting CQI' s with respect to all subchannels," and the setting for "reporting CQI' s with respect to n subchannels selected in order of good received quality" and the setting for "reporting CQI's with respect to the same subchannels as the subchannel reported in the previous CQI report."

In this way, by providing the configurations of the above embodiments, the present invention makes it possible to select an adequate CQI report method by deciding each time the time left for each communication terminal, satisfy the allowable delay time and the requested transmission rate and reduce the amount of CQI information.

Also, although cases have been described with the above embodiment as examples where the present invention is configured by hardware. However, the present invention can also be realized by software. For example, it is possible to implement the same functions as in the base station apparatus of the present invention by describing algorithms of the radio transmitting methods according to the present invention using the programming language, and executing this program with an information processing section by storing in memory.

Each function block employed in the description of each of the aforementioned embodiments may typically be implemented as an LSI constituted by an integrated circuit. These may be individual chips or partially or totally contained on a single chip.

"LSI" is adopted here but this may also be referred to as "IC," "system LSI," "super LSI," or "ultra LSI" depending on differing extents of integration.

Further, the method of circuit integration is not limited to LSI's, and implementation using dedicated circuitry or general purpose processors is also possible.
After LSI manufacture, utilization of an FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The present application is based on Japanese patent application No.2005-225892, filed on August 3, 2005, the entire content of which is expressly incorporated by reference herein.

### Industrial Applicability

The base station apparatus, communication terminal apparatus and multicarrier communication method according to the present invention can be applied to a mobile communication system using the OFDM scheme.

## Claims

1. A base station apparatus comprising:
an assigning section that assigns a subchannel to a communication terminal based on a channel quality indicator reported from the communication terminal;
a deciding section that decides a time left in an allowable delay time for data transmitted by the communication terminal; and
a commanding section that commands the communication terminal with the time left longer than a predetermined time, to report the channel quality indicator with respect to the assigned subchannel.

2. The base station according to claim 1, wherein the commanding section commands the communication terminal with the time left shorter than the predetermined time, to report channel quality indicators of all subchannels.

3. The base station apparatus according to claim 1, wherein the commanding section commands the communication terminal with the time left shorter than the predetermined time and a low transmission rate, to report channel quality indicators with respect to a predetermined number of subchannels selected from all subchannels in order of good received quality.

4. The base station apparatus according to claim 3, wherein the commanding section commands the communication terminal with the time left shorter than the predetermined time and the low transmission rate, to report a channel quality indicator with respect to the same subchannels reported as in a previous channel quality indicator report.

5. The base station apparatus according to claim 1, wherein the commanding section commands the communication terminal with the time left equal to or longer than the predetermined time and a high transmission rate, to report the channel quality indicator with respect to the subchannel assigned to the communication terminal and channel quality indicators with respect to a predetermined number of additional subchannels selected from all subcarriers in order of good received quality.

6. The base station apparatus according to claim 5, wherein the commanding section commands the communication terminal to report identification information for the predetermined number of subchannels together.

7. The base station apparatus according to claim 1, wherein the commanding section commands the communication terminal with the time left equal to or longer than the predetermined time and the high transmission rate, to report a channel quality indicator with respect to the same subchannel reported as in the previous channel quality indicator report.

8. A multicarrier transmitting method comprising:
assigning a subchannel to a communication terminal based on a channel quality indicator reported from the communication terminal;
deciding a time left in an allowable delay time for data transmitted from the communication terminal; and
commanding a communication terminal with a time left equal to or longer than a predetermined time, to report the channel quality indicator of the assigned subchannel.

## Amended claims

### Amended claims under Art. 19.1 PCT

**1.** (Amended) A radio communication apparatus comprising:
an assigning section that assigns a subchannel to a communicating party based on a channel quality indicator reported from the communicating party;
a deciding section that decides time left in an allowable delay time for data transmitted from the communicating party; and
a commanding section that designates a channel quality indicator report method matching the time left to the communicating party, as a channel quality indicator report method with respect to the subchannel.

**2.** (Amended) The radio communication apparatus according to claim 1, wherein the commanding section commands the communicating party with the time left equal to or longer than the predetermined time, to report the channel quality indicator with respect to the assigned subchannel.

**3.** (Amended) The radio communication apparatus according to claim 1, wherein the commanding section commands the communicating party with the time left shorter than the predetermined time to report channel quality indicators with respect to all subchannels.

**4.** (Amended) The radio communication apparatus according to claim 1, wherein the commanding section commands a communicating party with the time left shorter than the predetermined time and a low transmission rate, to report channel quality indicators with respect to a predetermined number of subchannels selected from all subchannels in order of good received quality.

**5.** (Amended) The radio communication apparatus according to claim 4, wherein the commanding section commands the communicating party with the time left shorter than the predetermined time and the low transmission rate, to report a channel quality indicator with respect to the same subchannel reported as in a previous channel quality indicator report.

**6.** Amended) The radio communication apparatus according to claim 1, wherein the commanding section commands the communicating party with the time left equal to or longer than the predetermined time and a high transmission rate, to report the channel quality indicator with respect to the subchannel assigned to the communicating party and channel quality indicators with respect to a predetermined number of additional subchannels from the rest of subchannels selected in order of good received quality.

**7.** (Amended) The radio communication apparatus according to claim 6, wherein the commanding section commands the communicating party to report identification information for the predetermined number of subchannels together.

**8.** (Amended) The radio communication apparatus according to claim 1, wherein the commanding section commands a communicating party with the time left equal to or longer than the predetermined time and the high transmission rate, to report the channel quality indicator with respect to the same subchannel reported as in a previous channel quality indicator report.

**9.** (Added) A base station apparatus comprising the radio communication apparatus according to claim 1.

**10.** (Added) A multicarrier communication method comprising:
assigning subchannels to a communicating party based on a channel quality indicator reported from the communicating party;
deciding a time left in an allowable delay time for data transmitted from the communicating party; and
designating a channel quality indicator report method matching the time left to the communicating party as a method for reporting the channel quality indicator with respect to the subchannel.

**11.** The multicarrier communication method according to claim 10, further comprising commanding a communicating party with the time left equal to or longer than a predetermined time, to report the channel quality indicator of the assigned subchannel.
